# EUROPÄISCHE PATENTSCHRIFT

(11) **EP 0 458 182 B1**
(45) Veröffentlichungstag und Bekanntmachung des Hinweises auf die Patenterteilung: **04.09.1996**
(21) Anmeldenummer: 91107867.3
(22) Anmeldetag: 15.05.1991
(51) Int. Cl.: B23K 26/00, B23K 26/14

(54) **Verfahren und Vorrichtung zum Laserstrahlbrennschneiden**
Process and device for laser beam oxycutting
Procédé et dispositif d'oxycoupage par rayon laser

(30) Priorität: 19.05.1990 DE 4016181
(43) Veröffentlichungstag der Anmeldung: 27.11.1991
(73) Patentinhaber: Linde Aktiengesellschaft, D-65189 Wiesbaden (DE)
(72) Erfinder: Mair, Hermann, Dipl.-Ing., W-8000 München 90 (DE); Herrmann, Johann, W-8044 Unterschleissheim (DE)
(74) Vertreter: Schaefer, Gerhard, Dr.

(56) Entgegenhaltungen:
- EP-A- 0 294 324
- DE-A- 2 658 503
- GB-A- 2 163 692
- PATENT ABSTRACTS OF JAPAN vol. 9, no. 187 (M-401)(1910) 3. August 1985
- PATENT ABSTRACTS OF JAPAN vol. 11, no. 74 (M-568)(2521) 6. M rz 1987
- PATENT ABSTRACTS OF JAPAN vol. 12, no. 274 (M-725)(3121) 29. Juli 1988
- PATENT ABSTRACTS OF JAPAN vol. 7, no. 68 (M-201)(1213) 19. M rz 1983
- OPTICS AND LASER TECHNOLOGY Bd. 6, Nr. 2, April 1974, HAYWARDS HEATH GB Seiten 78 - 81 W. W. DULEY ET AL. 'CO laser cutting of thin metal sheets with gas jet assist'
- PATENT ABSTRACTS OF JAPAN vol. 9, no. 319 (M-439)(2042) 14. Dezember 1985
- PATENT ABSTRACTS OF JAPAN vol. 10, no. 155 (M-485)(2211) 4. Juni 1986
- PATENT ABSTRACTS OF JAPAN vol. 10, no. 242 (M-509)(2298) 21. August 1986
- PATENT ABSTRACTS OF JAPAN vol. 12, no. 109 (M-682)(2956) 8. April 1988
- PATENT ABSTRACTS OF JAPAN vol. 12, no. 18 (M-660)(2865) 20. Januar 1988
- DVS-BERICHTE Bd. 109, 1987, D SSELDORF (DE) Seiten 188 - 199 H. MAIR ET AL. 'Thermisches Schneidverfahren Autogenes Brennschneiden, Plasma-Schmelzschneiden, Laserstrahlschneiden - ein technologisher und wirtschaftlicher Vergleich'

## Beschreibung

Die Erfindung betrifft ein Verfahren zum Laserstrahlbrennschneiden eines Werkstückes mit einem fokussierten Laserstrahl und einem Schneidgasstrahl, die beide durch eine Schneiddüse geführt werden, wobei der Schneidgasstrahl mit einem Gasschleier umhüllt wird. Die Erfindung betrifft außerdem eine Vorrichtung zum Laserstrahlbrennschneiden eines Werkstückes mit einer Schneiddüse, die einen Düsenkanal für einen fokussierten Laserstrahl und für einen Schneidgasstrahl umfaßt, wobei in der Schneiddüse zusätzlich zum Düsenkanal für das Schneidgas und für den Laserstrahl symmetrisch um diesen Düsenkanal ein oder mehrere Kanäle für ein einen Gasschleier bildendes Gas oder Gasgemisch angeordnet sind.

Beim Laserstrahlbrennschneiden wird durch die Fokussierung eines Laserstrahls auf eine zu schneidende Werkstückoberfläche deren Erwärmung auf Zündtemperatur erreicht. Durch die Schneiddüse wird außer dem fokussierten Laserstrahl ein Schneidgasstrahl auf die Werkstückoberfläche geführt. Der Werkstoff verbrennt und es bildet sich eine Schnittfuge (H. Mair, "Thermische Schneidverfahren: Autogenes Brennschneiden, Plasma-Schmelzschneiden, Laserstrahlschneiden - ein technologischer und wirtschaftlicher Vergleich", DVS-Berichte, Band 109, Deutscher Verlag für Schweißtechnik GmbH, 1987).

Aus der DE-A-2658503 ist ein Verfahren zum Laserstrahlschneiden eines Werkstücks mit einem fokussierten Laserstrahl und einem Gasstrahl aus Reaktions- und/oder Inertgas bekannt. Laserstrahl und Gasstrahl werden durch eine Schneiddüse geleitet. Um diesen Gasstrahl ist ein umhüllender Schutzgasstrahl zum Schutz der optischen Bauteile vor Verschmutzung mit Oxid und/oder Metalldämpfen vorgesehen.

Aus der JP-A-60-154894 ist bekannt, daß beim Laserstrahlschneiden ein Arbeitsgas durch elektrische Hilfsmittel in ein Hochtemperaturplasma umgewandelt werden kann.

Bei den bekannten Verfahren zum Laserstrahlbrennschneiden wird jedoch nicht immer, insbesondere bei größeren Materialdicken, die gewünschte optimale Schnittqualität erzielt.

Der Erfindung liegt deshalb die Aufgabe zugrunde, ein Verfahren und eine Vorrichtung der obengenannten Art aufzuzeigen, die eine Erhöhung der schneidbaren Materialdicke beim Laserstrahlbrennschneiden stärkerer Bleche gewährleisten und zu einer Verbesserung der Schnittqualität führen. Insbesondere soll die Aufhärtung des Werkstücks in der entstehenden Schnittfüge verhindert werden.

Diese Aufgabe wird erfindungsgemäß für das Verfahren dadurch gelöst, daß der Gasschleier den Schneidgasstrahl vorhangartig umgibt und eine zusätzliche Erwärmung des Werkstückes in Schnittdickenrichtung zur Verhinderung der Aufhärtung in der entstehenden Schnittfuge bewirkt.

Das wesentliche Merkmal der Erfindung liegt darin, daß ein heißer Gasschleier gleichsam wie ein Vorhang, ähnlich wie es beim autogenen Brennschneiden üblich ist, den Schneidgasstrahl umgibt. Der heiße Gasschleier bewirkt eine zusätzliche Erwärmung des Werkstücks in Schnittdickenrichtung, wodurch die Aufhärtung in der entstehenden Schnittfuge unterbunden wird. Der heiße Gasschleier verhindert, indem er den Schneidgasstrahl vorhangartig umgibt, daß die Umgebungsluft aufgrund der sich durch die hohe Strömungsgeschwindigkeit des Schneidgasstrahles ergebenden Sogwirkung mitgerissen wird.

Die Aufgabe wird für die erfindungsgemäße Vorrichtung dadurch gelöst, daß der oder die Kanäle an dem oder den gegen das Werkstück gerichteten Kanalaustritten in der Schneiddüse zur Erzeugung eines vorhangartigen Gasschleiers um den Schneidgasstrahl koaxial zum Düsenkanal für das Schneidgas verlaufen und daß eine Erwärmung des den Gasschleier bildenden Gases oder Gasgemisches vorgesehen ist.

Der Gasschleier besteht in einer vorteilhaften Ausführung des erfindungsgemäßen Verfahrens aus verbrannten Produkten eines Brenngas-Luft- oder Brenngas-Sauerstoff-Gemisches, die in einer weichen Flamme verbrennen. Die Flamme und damit der Gasschleier lassen sich hierbei einfach regeln.

Im erfindungsgemäßen Verfahren eignen sich als Brenngase alle bekannten Brenngase. Vorzugsweise werden Wasserstoff, Propan, Methan, Acetylen und/oder Ethylen eingesetzt. Als Schneidgas wird vorzugsweise Sauerstoffmit einer Reinheit von mindestens 99,5 % verwendet.

Eine andere Möglichkeit, den heißen Gasschleier zu erzielen, besteht darin, daß das Gas oder Gasgemisch auf elektrischem Wege oder indirekt durch den Laserstrahl erhitzt wird.

Dadurch, daß wesentlich langsamer strömendes Gas oder Gasgemisch des Gasschleiers den bedeutend schneller strömenden Schneidgasstrahl umgibt, wird eine in etwa laminare Geschwindigkeitsverteilung der gesamten Gasströmung erzielt. Die Gasgeschwindigkeit nimmt stetig vom Zentrum des Schneidgasstrahles nach außen bis auf sehr geringe Geschwindigkeitswerte ab.

Der Schneidgasstrahl wird folglich durch den Gasschleier stabilisiert. Er bleibt über eine längere Strecke (bis in die Schnittfuge im Werkstück) scharf gebündelt und breitet sich nicht aus. Das Brennschneiden von Blechen mit größerer Materialdicke wird so ermöglicht. Auch bringt dieses Verfahren eine wesentliche Verbesserung der Schnittqualität mit sich. Das Auswaschen der Schnittfläche sowie die Bildung von Kolkungen werden verhindert. Die Oxidation der Schnittflächen wird reduziert, so daß fast oxidfreie Schnittflächen erzielt werden können.

Ein besonders scharf gebündelter Schneidgasstrahl ergibt sich beim erfindungsgemäßen Verfahren dann, wenn das Schneidgas mit Überschallgeschwindigkeit die Schneiddüse verlaßt.

Beim erfindungsgemäßen Verfahren wird mit Vorteil eine Schneiddüse eingesetzt, die neben der zentralen Düsenbohrung für das Schneidgas und den Laserstrahl einen oder mehrere zusätzliche Kanäle für das den Gasschleier bildende Gas oder Gasgemisch enthält. Verlaufen der oder die zusätzlichen Düsenkanäle für das den Gasschleier bildende Gas oder Gasgemisch koaxial zum Düsenkanal, ergibt sich ein zur Strömungsrichtung des Schneidgases symmetrischer, ringförmiger Gasschleier. Dabei können symmetrisch um den Düsenkanal für das Schneidgas angeordnet, ein einziger ringförmiger, zusätzlicher Düsenkanal oder, gleichfalls symmetrisch angeordnet, mehrere miteinander verbundene oder getrennt verlaufende, zusätzliche Einzelkanäle für das den Gasschleier bildende Gas oder Gasgemisch verwendet werden. Der oder die zusätzlichen Düsenkanäle werden spezifisch für die Art des verwendeten Gases oder Gasgemisches ausgelegt. Damit wird beispielsweise sichergestellt, daß sich bei der Verbrennung eines Brenngas-Luft- oder Brenngas-Sauerstoff-Gemisches eine stabilisierte Flamme ausbildet.

Ein besonderer Vorteil der Erfindung liegt darin, daß, um sie anwenden zu können, lediglich die herkömmliche Schneiddüse einer Vorrichtung zum Laserstrahlbrennschneiden gegen eine erfindungsgemäße Schneiddüse mit einem oder mehreren zusätzlichen Düsenkanälen für das den Gasschleier bildende Gas oder Gasgemisch ausgetauscht werden muß.

Die Erfindung sei im folgenden anhand eines Ausführungsbeispieles näher erläutert:
Hierbei zeigen:
- Figur 1: den Strahlengang des Laserstrahls durch eine erfindungsgemäße Schneiddüse zur Werkstückoberfläche und
- Figur 2: diese Schneiddüse vergrößert dargestellt.

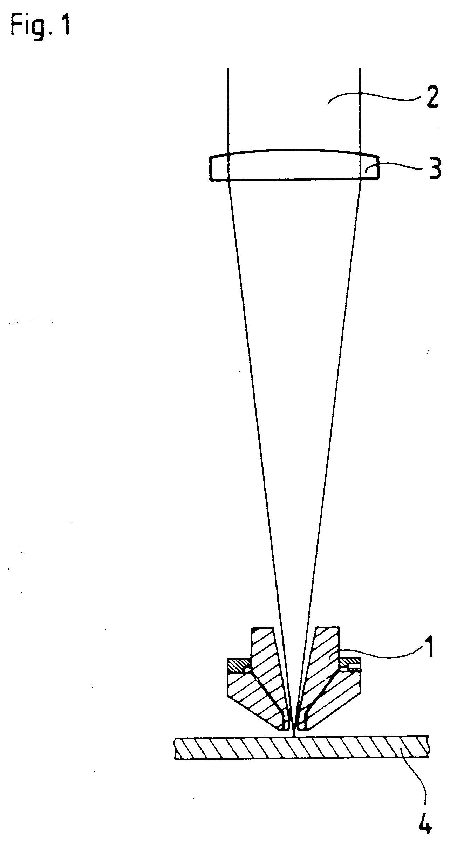

In Figur 1 ist abgebildet, wie durch eine erfindungsgemäße Schneiddüse 1 hindurch, die in einem nicht dargestellten Schneidkopf eingebaut ist, der zunächst parallele Laserstrahl 2 mit Hilfe einer Fokussierlinse 3 auf die Oberfläche des zu schneidenden Werkstückes 4 gebündelt wird. Der Laserstrahl durchdringt hierbei den zentral in der Schneiddüse angeordneten Düsenkanal für das Schneidgas.

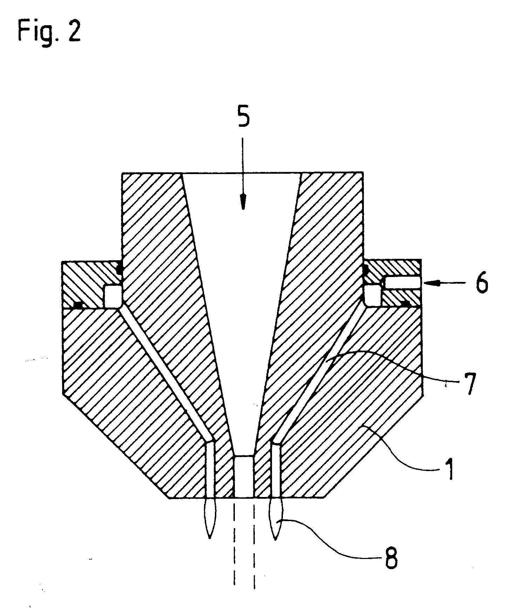

Figur 2 zeigt die Schneiddüse aus Figur 1 in vergrößerter Darstellung.

Das Schneidgas 5 strömt durch den zentralen Düsenkanal. Ein Brenngas-Luft- oder Brenngas-Sauerstoff-Gemisch 6 strömt durch den zusätzlichen ringförmigen Kanal 7 und verbrennt nach Verlassen der Schneiddüse in der Flamme 8. Die Verbrennungsprodukte bilden den heißen Gasschleier.

## Patentansprüche

1. Verfahren zum Laserstrahlbrennschneiden eines Werkstückes (4) mit einem fokussierten Laserstrahl (2) und einem Schneidgasstrahl (5), die beide durch eine Schneiddüse (1) geführt werden, wobei der Schneidgasstrahl (5) mit einem Gasschleier umhüllt wird, **dadurch gekennzeichnet**, daß der Gasschleier den Schneidgasstrahl (5) vorhangartig umgibt und eine zusätzliche Erwärmung des Werkstückes (4) in Schnittdickenrichtung zur Verhinderung der Aufhärtung in der entstehenden Schnittfuge bewirkt.

2. Verfahren nach Anspruch 1, dadurch gekennzeichnet, daß der Gasschleier aus verbrannten Produkten eines Brenngas-Luft- oder Brenngas-Sauerstoff-Gemisches (6) besteht, die in einer Flamme (8) verbrennen.

3. Verfahren nach Anspruch 1, dadurch gekennzeichnet, daß der Gasschleier aus einem elektrisch oder indirekt durch den Laserstrahl (2) erhitzten Gas oder Gasgemisch (6) besteht.

4. Verfahren nach einem der Ansprüche 1 bis 3, dadurch gekennzeichnet, daß das den Gasschleier bildende Gas oder Gasgemisch (6) eine wesentlich geringere Austrittsgeschwindigkeit beim Verlassen der Schneiddüse (1) als der Schneidgasstrahl (5) aufweist.

5. Verfahren nach einem der Ansprüche 1 bis 4, dadurch gekennzeichnet, daß der vom Gasschleier umgebene Schneidgasstrahl (5) mit Überschallgeschwindigkeit die Schneiddüse (1) verläßt.

6. Vorrichtung zum Laserstrahlbrennschneiden eines Werkstückes (4) mit einer Schneiddüse (1), die einen Düsenkanal für einen fokussierten Laserstrahl (2) und für einen Schneidgasstrahl (5) umfaßt, wobei in der Schneiddüse (1) zusätzlich zum Düsenkanal für das Schneidgas (5) und für den Laserstrahl (2) symmetrisch um diesen Düsenkanal ein oder mehrere Kanäle (7) für ein einen Gasschleier bildendes Gas oder Gasgemisch (6) angeordnet sind, **dadurch gekennzeichnet**, daß der oder die Kanäle (7) an dein oder den gegen das Werkstück (4) gerichteten Kanalaustritten in der Schneiddüse (1) zur Erzeugung eines vorhangartigen Gasschleiers um den Schneidgasstrahl koaxial zum Düsenkanal für das Schneidgas (5) verlaufen und daß eine Erwärmung des den Gasschleier bildenden Gases oder Gasgemisches (6) vorgesehen ist.

7. Vorrichtung nach Anspruch 6, dadurch gekennzeichnet, daß die Vorrichtung eine Flamme (8) zum Verbrennen eines den Gasschleier bildenden Brenngas-Luft- oder Brenngas-Sauerstoff-Gemisches (6) umfaßt.

8. Vorrichtung nach Anspruch 6, dadurch gekennzeichnet, daß in der Vorrichtung eine elektrische Erwärmung des den Gasschleier bildenden Gases oder Gasgemisches (6) vorgesehen ist.

## Claims

1. Method for laser-beam gas cutting of a workpiece (4) with a focused laser beam (2) and a cutting gas jet (5), both of which are guided by a cutting nozzle (1), the cutting gas jet (5) being sheathed with a gas veil, characterised in that the gas veil surrounds the cutting gas jet (5) like a curtain and causes additional heating of the workpiece (4) in the cutting depth direction to prevent hardening in the cut being made.

2. Method according to claim 1, characterised in that the gas veil consists of burnt products of a fuel gas and air or fuel gas and oxygen mixture (6) which are burning in a flame (8).

3. Method according to claim 1, characterised in that the gas veil consists of a gas or gas mixture (6) heated electrically or indirectly by the laser beam (2).

4. Method according to one of claims 1 to 3, characterised in that the gas or gas mixture (6) forming the gas veil exhibits a much lower outlet speed on leaving the cutting nozzle (1) than the cutting gas jet (5).

5. Method according to one of claims 1 to 4, characterised in that the cutting gas jet (5) surrounded by the gas veil leaves the cutting nozzle (2) at supersonic speed.

6. Device for laser-beam gas cutting of a workpiece (4) with a cutting nozzle (1) which comprises a nozzle passage for a focused laser beam (2) and for a cutting gas jet (5), one or more passages (7) for a gas or gas mixture (6) forming a gas veil being disposed in the cutting nozzle (1) in addition to the nozzle passage for the cutting gas (5) and for the laser beam (2) symmetrically about this nozzle passage, characterised in that at the passage outlet or outlets in the cutting nozzle (1) aimed at the workpiece (4) the passage or passages (7) run coaxially with the nozzle passage for the cutting gas (5) to produce a gas veil like a curtain around the cutting gas jet and in that heating is provided for the gas or gas mixture (6) forming the gas veil.

7. Device according to claim 6, characterised in that the device comprises a flame (8) for burning a fuel gas and air or fuel gas and oxygen mixture (6) forming the gas veil.

8. Device according to claim 6, characterised in that an electric heater is provided in the device for heating the gas or gas mixture (6) forming the gas veil.

## Revendications

1. Procédé de découpe par faisceau laser d'une pièce à usiner (4) au moyen d'un faisceau laser focalisé (2) et d'un jet d'un gaz de coupe (5), qui sont tous les deux amenés par une buse de coupe (1), dans lequel le jet de gaz de coupe (5) est entouré d'une nappe de gaz, ce procédé étant caractérisé en ce que la nappe de gaz entoure le jet de gaz de coupe (5) a la façon d'un rideau, et produit un réchauffement supplémentaire de la pièce (4) dans la direction de l'épaisseur de coupe, pour empêcher que se produise un durcissement par trempe dans la fente de coupe en cours de formation.

2. Procédé selon la revendication 1, caractérisé en ce que la nappe de gaz est composée des produits de combustion d'un mélange gaz combustible-air ou gaz combustible-oxygène (6), qui brûlent dans une flamme (8).

3. Procédé selon la revendication 1, caractérisé en ce que la nappe de gaz est composée d'un gaz ou d'un mélange gazeux (6) qui est réchauffé électriquement ou indirectement par le faisceau laser (2).

4. Procédé selon l'une des revendications 1 à 3, caractérisé en ce que le gaz ou le mélange gazeux (6) constituant la nappe de gaz présente à la sortie de la buse de découpe (1) une vitesse de sortie qui est sensiblement inférieure a celle du faisceau de gaz de coupe (5).

5. Procédé selon l'une des revendications 1 à 4, caractérisé en ce que le jet de gaz de coupe (5) entouré par la nappe de gaz sort de la buse de coupe (1) à vitesse supersonique.

6. Dispositif pour la découpe par faisceau laser d'une pièce à usiner (4) au moyen d'une buse de coupe (1) comprenant un canal de buse pour un faisceau à laser focalisé (2) et pour un jet de gaz de coupe (5) dans lequel, dans la buse de coupe (1), en plus du canal de buse pour le gaz de coupe (5) et pour le faisceau laser (2) sont disposés de façon symétrique autour de ce canal de buse, un ou plusieurs canaux (7) pour un gaz ou un mélange gazeux (6) formant une nappe de gaz, ce dispositif étant caractérisé en ce que le canal ou les canaux (7) au niveau des sorties de canal dirigées contre la pièce (4) prévue dans la buse de coupe (1) pour la création d'une nappe de gaz à la façon d'un rideau sont disposés autour du faisceau de gaz de coupe coaxialement par rapport au canal de buse pour le gaz de coupe (5), et en ce qu'il est prévu un réchauffement du gaz ou du mélange gazeux formant la nappe de gaz.

7. Dispositif selon la revendication 6, caractérisé en ce que le dispositif comprend une flamme (8) pour la combustion d'un mélange gaz combustible-air ou gaz combustible-oxygène (6) formant la nappe de gaz.

8. Dispositif selon la revendication 6, caractérisé en ce qu'il est prévu dans le dispositif un réchauffement électrique du gaz ou du mélange gazeux (6) formant la nappe de gaz.
